Europäisches Patentamt

(19) European Patent Office

Office européen des brevets

(11) Veröffentlichungsnummer: **0 024 717**
A2

(12) **EUROPÄISCHE PATENTANMELDUNG**

(21) Anmeldenummer: 80105043.6

(22) Anmeldetag: 26.08.80

(51) Int. Cl.³: **G 01 K 1/00**
A 61 B 5/00, A 61 B 19/02

(30) Priorität: 29.08.79 DE 2934804

(43) Veröffentlichungstag der Anmeldung:
**11.03.81 Patentblatt 81/10**

(84) Benannte Vertragsstaaten:
**AT BE CH FR GB IT LI LU NL SE**

(71) Anmelder: **Trunz, Thomas**
**Am Kohbach 9**
**D-7808 Waldkirch(DE)**

(72) Erfinder: **Trunz, Thomas**
**Am Kohbach 9**
**D-7808 Waldkirch(DE)**

(74) Vertreter: **Charrier, Rolf, Dipl.-Ing.**
**Postfach 260 Rehlingenstrasse 8**
**D-8900 Augsburg 31(DE)**

(54) **Temperaturmessfühler.**

(57) Bei Temperaturmeßfühlern mit Meßschaltung und einer an die Meßschaltung angeschlossenen und in einer Metallkappe angeordneten Meßperle werden zur Messung kontaminierte Objekte über den Fühler im Bereich der Metallkappe geschlossene schlauchartige Folien gestülpt. Um sicherzustellen, daß Temperaturmessungen nur dann vorgenommen werden können, wenn der Fühler mit einer Folie versehen ist, weist der Fühler eine Meßvorrichtung und die Folie ein die Meßvorrichtung beeinflussendes Teil auf. Die Meßvorrichtung gibt die Meßschaltung zur Temperaturmessung nur frei, wenn sie vom Teil auf der Folie beeinflußt wird.

FIG 1

EP 0 024 717 A2

Croydon Printing Company Ltd.

Dipl.-Ing.
*Rolf Charrier*
Patentanwalt

Rehlingenstraße 8 · Postfach 260
D-8900 Augsburg 31
Telefon 08 21/3 60 15 + 3 60 16
Telex 53 3 275
Postscheckkonto München Nr 15 47 89-801

8155/05/Ch/Ws

0024717

Augsburg, den 25. August 1980

Thomas Trunz
Am Kohbach 9
7808 Waldkirch

Temperaturmeßfühler

Die Erfindung betrifft einen Temperaturmeßfühler mit
Meßschaltung und eine an die Meßschaltung angeschlossene
in einer Metallkappe angeordneten Meßperle zur Messung
von Temperaturen kontaminierter Objekte, wobei über den
Fühler eine im Bereich der Metallkappe geschlossene
schlauchartige Folie gestülpt ist, die nach erfolgter
Messung beseitigt wird.

Derartige Temperaturmeßfühler finden zunehmend in der
Medizin Anwendung, insbesondere in Krankenhäusern für
Routinetemperaturmessungen bei Patienten. Da mit dem
gleichen Temperaturmeßgerät und damit mit dem gleichen
Temperaturmeßfühler die Temperaturen mehrerer Patienten
nacheinander gemessen werden, muß die Kontaminationsgefahr unterbunden werden. Hierbei ist beachtlich, daß
die Messungen zum Teil sublingual und zum Teil rektal
ausgeführt werden.

Um den Hygieneanforderungen zu genügen, ist es bekannt,
eine schlauchartige Folie über den Fühler zu stülpen,
welche nach jeder Messung vom Fühler entfernt wird. Es

- 2 -

handelt sich also hierbei um Folien, welche jeweils
nur für eine Messung verwendet und anschließend weggeworfen werden. Bei den bekannten Temperaturmeßfühlern
ist jedoch nicht gewährleistet, daß mit diesen nur
Messungen ausgeführt werden, wenn über sie eine Folie
gestülpt ist.

Es besteht daher die Aufgabe, den Temperaturmeßfühler
und die Folie so auszubilden, daß eine Temperaturmessung
nur dann möglich ist, wenn eine Folie über den Temperaturmeßfühler gestülpt ist.

Gelöst wird diese Aufgabe mit den Merkmalen des Anspruches 1. Vorteilhafte Ausgestaltungen sind den Unteransprüchen entnehmbar.

Wenn die Meßvorrichtung am Fühler von dem beeinflussenden Teil an der Folie beeinflußt wird, dann gibt die
Steuerschaltung, welche normalerweise die Meßschaltung
sperrt, diese Meßschaltung zur Anzeige von Temperaturwerten frei. Somit ist gewährleistet, daß eine Temperaturmessung nur dann möglich ist, wenn eine Folie auf
den Fühler gestülpt ist.

Der Schaltungsaufbau kann hierbei so getroffen werden,
daß die Steuerschaltung einen Zeitschalter einschaltet,
wenn die Meßvorrichtung beeinflußt wird und dieser Zeitschalter schaltet dann die Meßschaltung über eine bestimmte Zeitdauer zur Anzeige von Temperaturwerten frei.
Diese bestimmte Zeitdauer ist hierbei so eingestellt,
daß ausreichend Zeit zur Temperaturmessung bei einem Patienten besteht. Nach Ablauf dieser Zeitdauer muß
dann die Meßschaltung wieder mit der Speisespannungsquelle des Temperaturmeßgeräts verbunden werden. Wenn
zum Zeitpunkt des Anschlusses der Meßschaltung an die
Speisespannungsquelle die Meßvorrichtung am Fühler von
dem Teil an der Folie beeinflußt wird, dann schaltet
die Steuerschaltung die Meßschaltung nicht frei. Durch
diese Ausführungsvariante ist sichergestellt, daß mit
der gleichen Folie nicht mehrere Messungen nacheinander
ausgeführt werden können. Wird nämlich nach Ablauf der
bestimmten Zeitdauer die Meßschaltung wieder eingeschaltet und es befindet sich noch die gleiche Folie auf dem
Fühler, ist eine Temperaturmessung nicht möglich. Vielmehr muß nach Ablauf der bestimmten Zeitdauer die Folie
vom Fühler entfernt, sodann die Meßschaltung eingeschaltet werden und danach eine neue Folie aufgestülpt werden, damit eine nachfolgende Temperaturmessung möglich
ist.

Ausführungsbeispiele der Erfindung werden nachfolgend
anhand der Zeichnungen erläutert. Es zeigen:

Fig. 1       eine Ansicht des Temperaturmeßfühlers mit
             Anschlußkabel und der bei einem solchen
             Fühler verwendeten Folie;

Fig. 2       verschiedene Steuerschaltungen zum Steuern
             der Meßschaltung;

Fig. 3       ein erster Schnitt durch den Kabelanschlußkasten des Temperaturmeßfühlers;

Fig. 4      ein weiterer Schnitt bei einer alternativen
            Ausführungsform;

Fig. 5      ein Schnitt durch den Kabelanschlußkasten
            bei einer dritten Ausführungsform.

Fig. 6      eine Schaltungsanordnung zum zeitabhängigen Freischalten der Meßschaltung.


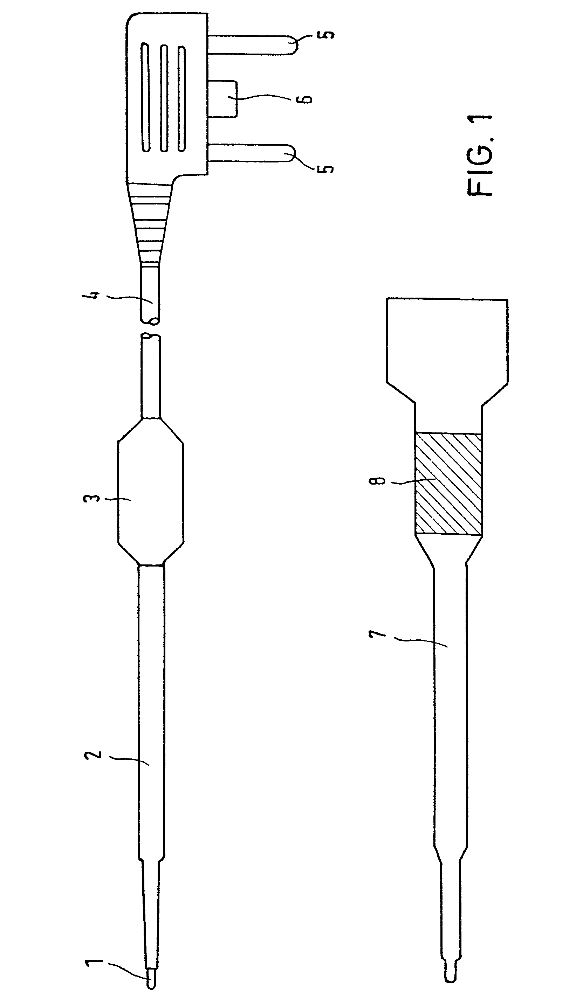

Der Temperaturmeßfühler gemäß Fig. 1 besteht aus dem
Fühlerkörper 2, einer kleinen Metallkappe 1, in welcher
die Temperaturmeßperle angeordnet ist und einem Kabelanschlußkasten 3. Vom Kabelanschlußkasten 3 verläuft
ein Kabel 4 zu einem Stecker. Die beiden Stifte 5 des
Steckers sind für den Meßperlenanschluß vorgesehen,
während mit 6 eine Mehrfachsteckverbindung bezeichnet
ist.

Im Kabelanschlußkasten 3 ist eine Meßvorrichtung angeordnet, auf welche später noch eingegangen wird.

Die dünne flexible Folie 7 wird über den Temperaturmeßfühler 1,2,3 gestülpt. Die Kontur der Folie 7 ist im
vorderen Teil entsprechend der Kontur der Metallkappe 1,
des Fühlerkörpers 2 und des Anschlußkastens 3. Im hinteren Teil erweitert sich die Folie wesentlich gegenüber der Kontur des Fühlers. Wird die Folie 7 über den
Temperaturmeßfühler gestülpt, dann legt sie sich an dessen Kontur eng an. Wird die Folie vom Temperaturmeßfühler abgezogen, dann stülpt sie sich hierbei um, wodurch ausreichend sichergestellt ist, daß eine solche
Folie nach dem Abziehen nicht wieder-verwendbar ist.

Im Bereich des Kabelanschlußkastens 3 weist die Folie 7
einen Teil 8 auf, welcher geeignet ist, die Meßvorrichtung im Kabelanschlußkasten 3 zu beeinflussen.

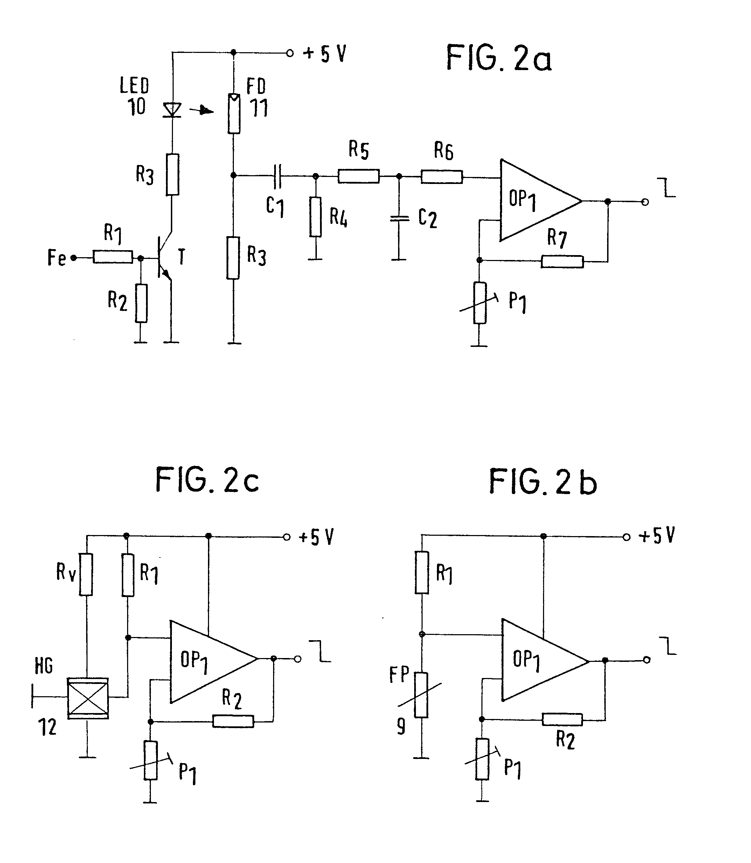

Eine erste Ausführungsform wird anhand der Fig. 2a und
5 näher erläutert.

In dem Kabelanschlußkasten 3 sind eine lichtemitierende
Diode 10 und ein lichtempfindliches elektrisches Bauteil
11 angeordnet. Bei Teil 8 handelt es sich um eine lichtreflektierende Schicht, welche drucktechnisch auf der
Folie 7 aufgebracht ist. Die lichtemitierende Diode 10
ist mittels eines Schalttransistors T in Wechselspannungbetrieb geschaltet. Hierdurch werden Gleichlichtanteile
für die Empfängerdiode 11 ausgeschaltet. Die Wechselspannung Fe für den Transistor T wird von einem separaten Frequenzgenerator erzeugt oder von der Multiplexfrequenz abgegriffen, wie sie im Temperaturmeßgerät vorhanden ist.

Wird nun die Folie 7 über den Fühler gestülpt und die
Reflexionsschicht 8 kommt über die Dioden 10,11, dann
erhält die Empfängerdiode 11 durch Streuung und Reflexion an der Schicht 8 das Wechsellicht der Sendediode
10. Die lichtempfindliche Diode 11 arbeitet über einen
Arbeitswiderstand R3. Eine galvanische Trennung erfolgt über den Kondensator C1. Der Widerstand R4 dient als Entladewiderstand. Über den Vorwiderstand R5 wird der Kondensator C2 aufgeladen. Die dadurch entstehende Gleichspannung wird über den Widerstand R6 an einen Eingang des Operationsverstärkers OP1 geleitet. Der Operationsverstärker OP1 arbeitet mittels der Widerstände R7 und P1 als Schmitt-Trigger. Über den Widerstand P1 kann die Empfindlichkeit der Schaltung eingestellt werden. Durch den Widerstand R5 und den Kondensator C2 ergibt sich eine Zeitkonstante, die ein dauerndes Hin- und Herschalten des Schmitt-Trigger-Ausganges in Abhängigkeit der Frequenz der Diode 10 vermeidet. Langsame Empfindlichkeitsänderungen dagegen, hervorgerufen durch Überziehen oder Entfernen der Folie 7 mit der Reflexschicht 8 hingegen bewirken eine Änderung des Ausgangs des Operationsverstärkers, dessen Ausgangssignal die Meßschaltung freischaltet, an welcher die Temperaturmeßperle in der Metallkappe 1 angeschlossen ist.

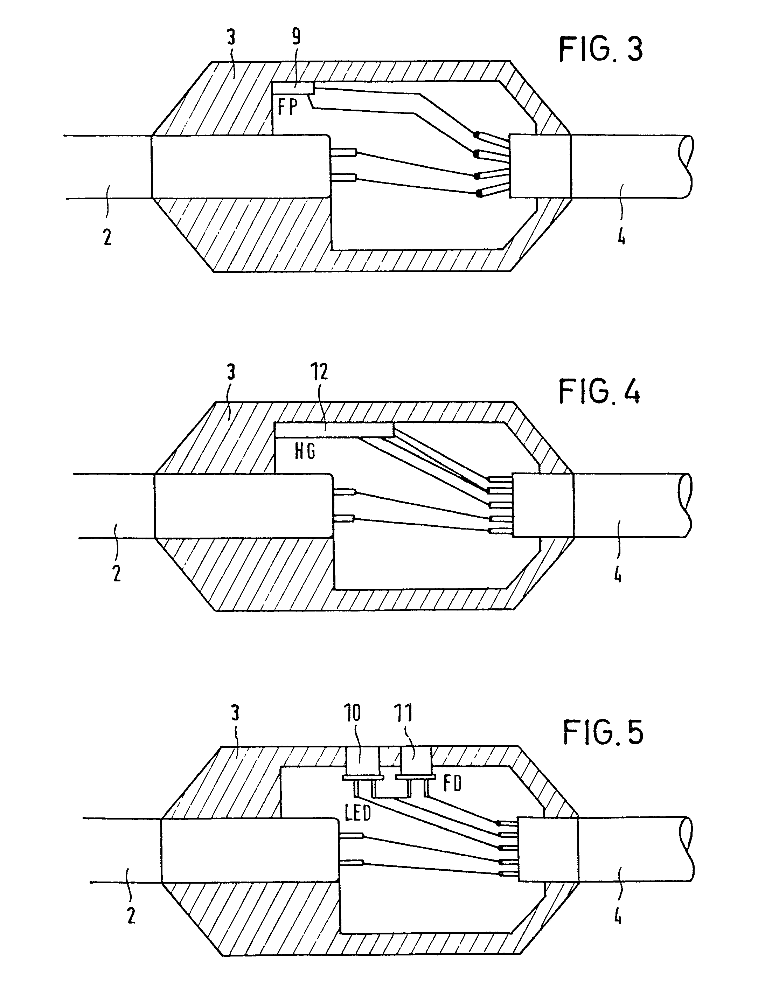

Eine zweite Ausführungsvariante wird anhand der Fig. 2b und 3 erläutert.

Die Meßvorrichtung im Kabelanschlußkasten 3 besteht bei dieser Ausführungsform aus einer Feldplatte 9 während Teil 8 der Folie 7 aus einer Farbe besteht, welche magnetisierbares Material, beispielsweise Eisen enthält. Wird die Folie 7 über den Fühler gestülpt und kommt hierbei die Farbschicht 8 in den Bereich des Kabelanschlußkastens 3, dann findet eine Widerstandsänderung bei der Feldplatte 9 statt, welche bewirkt,

0024717

daß der Operationsverstärker OP1 ein Signal abgibt,
welches die Meßschaltung freischaltet, an welcher die
Temperaturmeßperle angeschlossen ist. Die Feldplatte 9
arbeitet über einen Vorwiderstand R1. Der Operationsverstärker OP1 arbeitet in der zuvor beschriebenen
Weise.

Für die Arbeitsweise der Feldplatte 9 gibt es zwei Möglichkeiten. Man kann die Farbe 8 vormagnetisieren, wobei
dann diese Vormagnetisierung die Feldplatte 9 entsprechend verstimmt. Es ist jedoch auch möglich, die Feldplatte 9 magnetisch vorzuspannen und die Ferrofarbe 8
nicht vorzumagnetisieren. Je nach Einsatzbereich, d.h.
je nachdem ob das Gerät ausschließlich für sublinguale
oder ausschließlich für rektale Messungen gebraucht
werden soll, werden Temperaturmeßfühler und Ferrofarbe
8 farblich unterschiedlich gekennzeichnet. Dies bedeutet also, daß der Temperaturmeßfühler mit nicht vorgespannter Feldplatte für eine rektale Messung und die
zugehörige Folie 7 mit vormagnetisierter Ferrofarbe 8
eine andere Farbe aufweisen als Fühler und Folie für
sublinguale Messungen wo die Feldplatte 9 magnetisch
vorgespannt ist und die Ferrofarbe 8 nicht magnetisiert ist. Dies hat den Vorteil, daß die entsprechenden
Fühler im Krankenhausbereich nur für die speziell dafür
vorgesehenen Einsatzgebiete kenntlich sind.

Eine dritte Ausführungsvariante zeigen die Fig. 2c und 4.
Die Meßvorrichtung im Kabelanschlußkasten 3 besteht in
diesem Fall aus einem Hallgenerator 12. Bei Teil 8 der Folie 7 handelt es sich wiederum um eine magnetisch
vorgespannte Ferrofarbe. Der Hallgenerator ist durch
einen Vorwiderstand Rv vorgespannt. Im übrigen entspricht die Arbeitsweise der Schaltung nach Fig. 2c
derjenigen nach Fig. 2b.

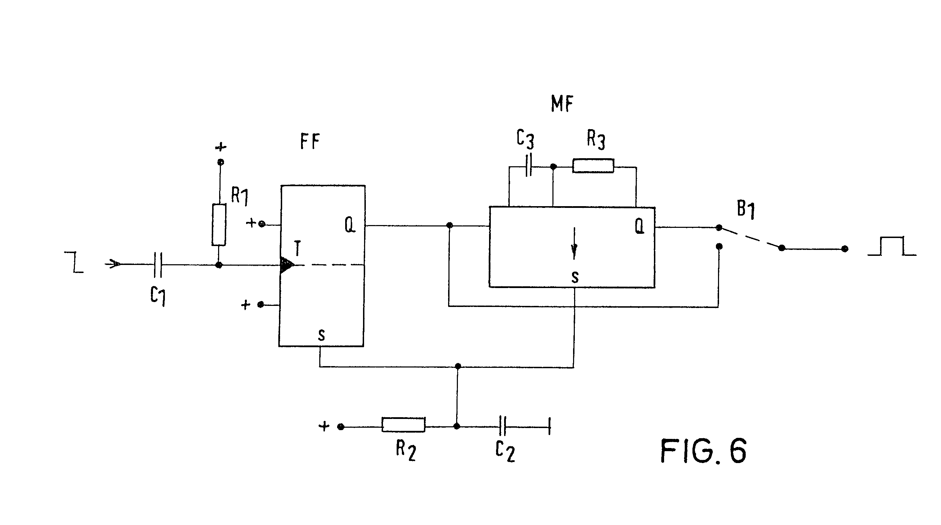

Bei der Schaltungsanordnung nach Fig. 6 wird das
Flip-Flop FF und das Monoflop MF über die S-Eingänge
durch das RC-Glied R2 C2 in Sperrlage geschaltet, wenn
die Betriebsspannung angelegt, also das Gerät eingeschaltet wird. Die Zeit des RC-Glieds ist so dimensioniert, daß kurze Eingangssignale während der Einschaltphase über den Kondensator C1 unwirksam sind. Es handelt
sich hier also um eine Netzanlaufschaltung.

Wird nun von einem der Operationsverstärker OP 1 der
Steuerschaltungen nach Fig. 2 ein Signal erzeugt, infolge Beeinflussung der Meßvorrichtung, dann fällt das
Flip-Flop FF in Arbeitslage und schaltet seinerseits
das Monoflop MF um. Infolge des RC-Glieds C3 R3 bleibt
dies z.B. 20 bis 30 Sekunden umgeschaltet. Über den
Ausgang Q und die Brücke B1 wird dann die Meßschaltung
während dieser Zeit freigeschaltet.

Nach Ablauf dieser Zeit fällt das Monoflop MF in Ruhelage zurück und sperrt somit die Meßschaltung. Das
Flip-Flop FF ist aber zu dieser Zeit noch in Arbeitslage und muß erst in Sperrlage zurückgekippt werden,
um beim erneuten Übergang in Arbeitslage das Monoflop
MF erneut aktivieren zu können.

Durch Abziehen der Folie verschwindet das Signal am
Ausgang des Operationsverstärkers OP1, wodurch das
Flip-Flop FF in Sperrlage zurückkippt. Durch Aufziehen
einer neuen Folie erzeugt der Operationsverstärker OP1
ein neues Signal, wodurch das Flip-Flop FF in Arbeitslage kippt, wodurch wiederum das Monoflop MF umgeschaltet wird, und somit eine neue Temperaturmessung
durchgeführt werden kann.

Bei der gezeigten Schaltung ist also gewährleistet,
daß erst nach Abziehen der benutzten Folie und Aufziehen einer neuen Folie eine erneute Messung durchgeführt werden kann.

In bestimmten Anwendungsfällen sind Dauermessungen der
Temperatur erforderlich. Um diese Dauermessungen
durchführen zu können, ist die Brücke B1 vorgesehen,
welche das Monoflop MF überbrückt. Wird die Brücke von
der gezeigten in die andere Stellung umgeschaltet, dann
ist nach Aufziehen einer Folie auf den Fühler eine
laufende Messung möglich, da bein aufgezogener Folie
das Flip-Flop in Arbeitslage bleibt. Wird die Folie
abgezogen, dann kehrt das Flip-Flop FF in seine Sperrlage zurück, wodurch die Meßschaltung abgeschaltet wird.

8155/05/Ch/Ws                    25. August 1980

Patentansprüche

1. Temperaturmeßfühler mit Meßschaltung und einer an die Meßschaltung angeschlossenen in einer Metallkappe eines Fühlers angeordneten Meßperle, wobei auf dem Fühler eine im Bereich der Metallkappe geschlossene Umhüllung aufsteckbar ist und eine Schaltvorrichtung vorgesehen ist, die beim Aufstecken der Umhüllung die Meßschaltung ein- und beim Abziehen ausschaltet, dadurch g e k e n n z e i c h n e t , daß am Fühler eine fotoelektrische oder magnetempfindliche Meßvorrichtung angeordnet ist, die Umhüllung aus einer Folie besteht, an der ein diese Meßvorrichtung im auf dem Fühler aufgestülptem Zustand beeinflussendes Teil angeordnet ist, und die Meßvorrichtung an eine Steuerschaltung angeschlossen ist, welche die Meßschaltung freischaltet, wenn die Meßvorrichtung von dem Teil an der Folie beeinflußt wird.

2. Temperaturmeßfühler nach Anspruch 1, dadurch g e k e n n - z e i c h n e t , daß die Meßvorrichtung im hinteren Bereich des Fühlers angeordnet ist.

3. Temperaturmeßfühler nach Anspruch 2, dadurch g e k e n n - z e i c h n e t , daß die Meßvorrichtung im Kabelanschluß - kasten angeordnet ist.

4. Temperaturmeßfühler nach Anspruch 1, dadurch g e k e n n - z e i c h n e t , daß die Meßschaltung von der Steuerschaltung nicht freigeschaltet wird, wenn zum Zeitpunkt des Anschlusses der Meßschaltung an eine Speisespannungsquelle die Meßvorrichtung beeinflußt wird.

5. Temperaturmeßfühler nach Anspruch 1 oder 4, dadurch g e - k e n n z e i c h n e t , daß die Steuerschaltung einen Zeitschalter einschaltet, der die Meßschaltung über eine bestimmte Zeit freischaltet.

6. Temperaturmeßfühler nach einem der Ansprüche 1 bis 5, dadurch g e k e n n z e i c h n e t , daß die Meßvorrichtung einen als Steuerschaltung dienenden Operationsverstärker ansteuert.

7. Temperaturmeßfühler nach einem der Ansprüche 1 bis 6, dadurch g e k e n n z e i c h n e t , daß die Meßvorrichtung aus mindestens einem fotoelektrischen Bauteil besteht und das beeinflussende Teil ein farbiger Aufdruck auf der Folie ist.

8. Temperaturmeßfühler nach Anspruch 7, dadurch g e k e n n - z e i c h n e t , daß das fotoelektrische Bauteil aus einer lichtemittierenden Diode und einer lichtempfindlichen Diode besteht und der Aufdruck lichtreflektierend ist.

9. Temperaturmeßfühler nach Anspruch 8, dadurch g e k e n n - z e i c h n e t , daß die lichtemittierende Diode über einen Transistor im Wechselspannungsbetrieb arbeitet.

10. Temperaturmeßfühler nach Anspruch 9, dadurch g e k e n n - z e i c h n e t , daß die lichtempfindliche Diode in Serie mit einem Arbeitswiderstand geschaltet ist, an die Verbindung zwischen Diode und Arbeitswiderstand ein Vorwiderstand und an diesen ein an Masse liegender Kondensator und ein Eingang des Operationsverstärkers angeschlossen ist.

11. Temperaturmeßfühler nach Anspruch 10, dadurch g e k e n n - z e i c h n e t , daß zwischen der Verbindung zwischen Diode und Arbeitswiderstand und dem Vorwiderstand ein Kondensator geschaltet ist und zwischen dem Kondensator und dem Vorwiderstand ein an Masse liegender Widerstand angeschlossen ist.

12. Temperaturmeßfühler nach einem der Ansprüche 1 bis 6, dadurch g e k e n n z e i c h n e t , daß bei einem magnetempfindlichen Bauteil das beeinflussende Teil ferromagnetisch ausgebildet ist.

13. Temperaturmeßfühler nach Anspruch 12, dadurch g e k e n n - z e i c h n e t , daß das magnetempfindliche Bauteil eine Feldplatte ist und der beeinflussende Teil ein Aufdruck aus Ferrofarbe ist.

14. Temperaturmeßfühler nach Anspruch 13, dadurch g e k e n n - z e i c h n e t , daß die Feldplatte nicht vorgespannt und die Ferrofarbe magnetisiert ist.

15. Temperaturmeßfühler nach Anspruch 13, dadurch g e k e n n - z e i c h n e t , daß die Feldplatte vorgespannt und die Ferrofarbe unmagnetisiert ist.

16. Temperaturmeßfühler nach Anspruch 14 und 15, dadurch g e - k e n n z e i c h n e t , daß der Fühler mit nicht vorgespannter Feldplatte und die Folie mit magnetisierter Ferrofarbe farblich unterschiedlich sind zum Fühler mit vorgespannter Feldplatte und zur Folie mit unmagnetischer Ferrofarbe.

17. Temperaturmeßfühler nach Anspruch 12, dadurch g e k e n n - z e i c h n e t , daß das magnetempfindliche Bauteil ein Hallgenerator und der beeinflussende Teil ein Aufdruck aus magnetischer Ferrofarbe ist.

18. Temperaturmeßfühler nach Anspruch 13, dadurch g e k e n n - z e i c h n e t , daß ein Eingang des Operationsverstärkers zwischen der Feldplatte und einem Vorwiderstand angeschlossen ist.

19. Temperaturmeßfühler nach Anspruch 17, dadurch g e k e n n - z e i c h n e t , daß ein Eingang des Operationsverstärkers zwischen dem Hallgenerator und einem Vorwiderstand angeschlossen und der Hallgenerator über einen weiteren Vorwiderstand vorgespannt ist.

20. Temperaturmeßfühler nach einem der Ansprüche 6 bis 19, da- durch g e k e n n z e i c h n e t , daß der Operationsver- stärker als Schmitt-Trigger geschaltet ist, in dem sein weiterer Eingang über einen ersten Widerstand mit Masse und einen zweiten Widerstand mit seinem Ausgang verbunden ist.

21. Temperaturmeßfühler nach Anspruch 20, dadurch g e k e n n - z e i c h n e t , daß der erste Widerstand einstellbar ist.

22. Temperaturmeßfühler nach einem der Ansprüche 1 bis 21, dadurch g e k e n n z e i c h n e t , daß der vordere Teil der Folie in seiner Kontur der Außenkontur des Fühlers entspricht und der hintere Teil gegenüber der Fühlerkontur wesentlich er- weitert ist.

FIG. 1

FIG. 2a

FIG. 2c

FIG. 2b

FIG. 3

FIG. 4

FIG.5

FIG.6